# FASCICULE DE BREVET EUROPEEN

(11) **EP 1 452 705 B1**
(45) Date de publication et mention de la délivrance du brevet: **10.10.2007**
(21) Numéro de dépôt: 04290505.9
(22) Date de dépôt: 25.02.2004
(51) Int. Cl.: F01P 7/04

(54) **Système de commande de la vitesse de rotation d'un moteur hydraulique notamment pour un ventilateur pour véhicule automobile**
Drehzahlsteuervorrichtung für einen Hydraulikmotor insbesondere für einen Lüfter eines Kraftfahrzeuges
Rotational speed control system for a hydraulic motor in particular for a fan of an automotive vehicule

(30) Priorité: 25.02.2003 FR 0302282
(43) Date de publication de la demande: 01.09.2004
(73) Titulaire: Jtekt HPI, 94430 Chennevieres sur Marne (FR)
(72) Inventeur: Gourlaouen, Patrick, 78390 Bois D'Arcy (FR)
(74) Mandataire: Thinat, Michel

(56) Documents cités:
- US-A- 4 874 072
- US-A- 5 947 247
- US-A1- 2002 066 422
- US-B1- 6 328 000
- US-B1- 6 481 388

## Description

L'invention concerne un système de commande de la vitesse de rotation d'un moteur hydraulique d'entraînement en rotation notamment d'un ventilateur pour véhicule automobile, du type défini dans le préambule de la revendication 1.

Un système de ce type est connu du brevet US 6 481 388. Dans ce système connu, le capteur de vitesse est utilisé pour optimiser certains paramètres de fonctionnement du moteur et du véhicule.

Cependant, ce document est totalement tacite quant au problème de fonctionnement du moteur lorsque l'effet de refroidissement par la ventilateur à produire est minimal ou pourrait être nul.

L'invention a pour but de proposer une solution à ce problème.

Ce but est atteint grâce aux caractéristiques énoncées dans la partie caractérisante de la revendication 1.

D'autres caractéristiques de l'invention sont les objets des revendications dépendantes 2 et 3.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 illustre, sous forme schématique, un système de commande de la vitesse de rotation d'un ventilateur entraîné par un moteur hydraulique, pour véhicule automobile, selon la présente invention et
- la figure 2 montre les caractéristiques de la vitesse du ventilateur en fonction du temps lors du démarrage, en A pour un système selon l'état de la technique et en B pour le système selon l'invention.

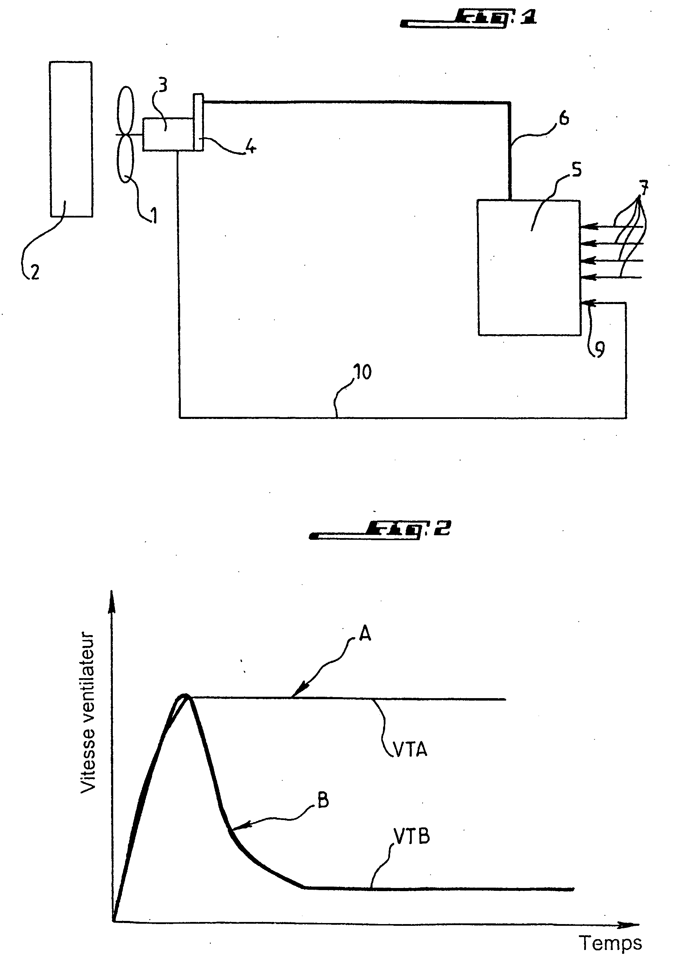

Selon la figure 1, un système de commande de la vitesse de rotation d'un ventilateur désigné par la référence 1, associé à un dispositif radiateur 2, pour véhicule automobile, comprend un moteur hydraulique 3 dont la vitesse de rotation est déterminée par une valve proportionnelle 4 qui fait partie d'un dispositif hydraulique non représenté et est pilotée par un dispositif électronique tel qu'un microprocesseur 5 par une liaison indiquée en 6. Le microprocesseur 5 comprend, dans l'exemple représenté, quatre entrées analogiques de réception de paramètres de température significatifs du fonctionnement du véhicule équipées du système de commande, tel que des températures de l'huile de moteur, de l'air de suralimentation, de l'huile hydraulique et de l'huile de la boîte de vitesse.

La valve 3 est une électrovalve proportionnelle qui est activée par un courant que le microprocesseur envoie dans la bobine d'excitation de la valve par la liaison 6, la valve étant avantageusement fermée en absence d'un courant d'excitation.

Selon des caractéristiques essentielles de l'invention, l'invention prévoit la mesure de la vitesse de rotation du ventilateur et une boucle fermée d'asservissement de la vitesse du ventilateur en fonction des différents paramètres analogiques tels qu'appliqués aux entrées 7 du microprocesseur 5 et, le cas échéant, numériques non illustrés.

Pour mettre en oeuvre ces caractéristiques de l'invention, le système comporte un capteur de la vitesse de rotation du ventilateur 1, avantageusement un capteur directement intégré au moteur hydraulique 3, adapté pour adresser des valeurs de mesure à une entrée 9 du microprocesseur 5, par une liaison indiquée en 10.

Grâce à la boucle d'asservissement sur la vitesse de rotation du ventilateur, l'invention, en assurant un contrôle de la rotation effective du ventilateur permet un fonctionnement à la vitesse la plus basse permise par la technologie du moteur hydraulique.

La figure 2 illustre les courbes caractéristiques de la vitesse de rotation du ventilateur 1 en fonction du temps. On constate, que conformément à l'invention illustrée par la courbe B, la vitesse du ventilateur augmente rapidement lors de la phase transitoire de démarrage mais descend ensuite à une valeur relativement faible VTB constante, qui est la vitesse de traînée minimum, c'est-à-dire la limite basse de rotation avant calage du moteur hydraulique.

En comparaison, dans un système selon l'état de la technique illustré par la courbe A, la vitesse de traînée minimum VTA se situe au niveau du sommet de la courbe B, c'est-à-dire à une valeur considérablement plus élevée.

Cette différence considérable entre les vitesses de traînée minimum des systèmes selon l'invention et de l'état de la technique est due au fait que, dans le dernier cas, on contrôle la vitesse du moteur en boucle ouverte via la pression produit par la moteur hydraulique 3, en fonction d'information de température ? sans retour d'information sur la vitesse résultante du ventilateur, ce qui nécessite de tenir compte des dispersions au niveau du moteur 3 et de la valve 4, comme cela a été expliqué plus haut.

Par contre, dans le cas de l'invention, la connaissance précise de la vitesse de rotation, grâce au capteur de vitesse, permet de se placer à la limite basse de rotation avant calage du moteur hydraulique. La boucle d'asservissement sur la vitesse permet d'éviter que la vitesse de rotation du moteur descende en dessous de sa valeur minimum, ce qui entraînerait le calage du moteur. Etant donné l'abaissement considérable de la vitesse de traînée minimum, que permet l'invention, le système selon l'invention procure une réduction de la pollution par la limitation du bruit de fonctionnement dans la phase de refroidissement minimum et une économie en énergie grâce à la limitation de la puissance absorbée par le circuit hydraulique dans cette phase de refroidissement minimum. L'invention permet également un auto-diagnostic de la transmission hydraulique, du à la surveillance des dérives entre les valeurs de vitesse de consigne et réelle.

## Revendications

1. Système de commande de la vitesse de rotation d'un moteur hydraulique (3) d'entraînement en rotation d'un ventilateur (1) notamment pour véhicule automobile, du type comprenant ledit moteur hydraulique (3) un circuit hydraulique de commande du moteur comportant une valve de régulation (4) du moteur en fluide hydraulique sous pression, un dispositif électronique (5) de pilotage de la valve (4) en fonction de paramètres relatifs au fonctionnement du véhicule, un capteur de la vitesse de rotation du moteur hydraulique (3) et un circuit d'asservissement en boucle fermée (10) de la vitesse du moteur (3) en fonction desdits paramètres du fonctionnement du véhicule, **caractérisé en ce que** le système est adapté pour permettre au moteur (3) un fonctionnement à une vitesse qui est la vitesse de traînée minimum du moteur (3) sans risque de calage.

2. Système selon la revendication 1, **caractérisé en ce que** le capteur de vitesse de la rotation du moteur (3) est intégré à ce moteur.

3. Système selon l'une des revendications 1 ou 2, **caractérisé en ce que** la sortie du capteur de vitesse est reliée à une entrée (9) du dispositif électronique de pilotage.

## Claims

1. System for controlling the rotation speed of a hydraulic motor (3) for driving a fan (1) in rotation, especially for an automotive vehicle, of the type consisting of said hydraulic motor, a hydraulic control circuit of the motor displaying a regulating valve (4) of the moter for the hydraulic fluid under pressure, an electronic device (5} for governing the valve (4) as a function of relative parameters of functioning of the vehicle, a rotation speed sensor for the hydraulic motor (3) and a closed loop control circuit (10) for the speed of the motor (13) as a function of said functioning parameters of the vehicle, **characterized in that** the system is adapted to permit the motor (3) to function at a speed that is the minimum drag speed of the motor (3) without the risk of stalling out.

2. System as in claim 1, **characterized in that** the rotation speed sensor of the motor (3) is integrated in the motor.

3. System as in one of claims 1 or 2, **characterized in that** the output of the speed sensor is linked to an input (9) of the electronic governing device.

## Patentansprüche

1. System zur Steuerung der Drehgeschwindigkeit eines Hydraulikmotors (3), der einen Ventilator (1) rotierend antreibt, vor allem für ein Kraftfahrzeug, vom Typ aufweisend den besagten Hydraulikmotor (3), einen Hydraulikkreis zur Steuerung des Motors, umfassend ein Ventil (4) zur Regulierung der Hydraulik-Druckflüssigkeit des Motors, eine elektronische Vorrichtung (5) zur Steuerung des Ventils (4) in Abhängigkeit von Parametern, die sich auf die Funktion des Fahrzeugs beziehen, einen Sensor der Drehgeschwindigkeit des Hydraulikmotors (3) und einen geschlossenen Regelkreislauf (10) der Geschwindigkeit des Motors (3) in Abhängigkeit der besagten Funktionsparameter des Fahrzeugs, **dadurch gekennzeichnet, dass** das System derart beschaffen ist, damit der Motor (3) mit einer Geschwindigkeit funktionieren kann, welche die minimale Widerstandsgeschwindigkeit des Motors (3) ohne Blockiergefahr ist.

2. System nach Anspruch 1, **dadurch gekennzeichnet, dass** der Sensor der Drehgeschwindigkeit des Motors (3) in diesen Motor integriert ist.

3. System nach einem der Ansprüche 1 oder 2, **dadurch gekennzeichnet, dass** der Ausgang des Geschwindigkeitssensors mit einem Eingang (9) der elektronischen Steuervorrichtung verbunden ist.
